# EUROPEAN PATENT APPLICATION

(11) **EP 3 103 836 A1**
(43) Date of publication of application: **14.12.2016**
(21) Application number: 15171836.8
(22) Date of filing: 12.06.2015
(51) Int. Cl.: C08L 27/18, C09D 127/18, C08K 5/095, C08F 214/26, C08F 259/08

(54) **FLUOROPOLYMER WITH IMPROVED TRANSPARENCY**

(71) Applicant: 3M Innovative Properties Company, St. Paul, MN 55133-3427 (US)
(72) Inventor: ZIPPLIES, Tilman, 84489 Burghausen (DE); DADALAS, Michael, 84489 Burghausen (DE); HINTZER, Klaus, 84556 Kastl (DE); TRAUNSPURGER, Helmut, 84387 Julbach (DE)
(74) Representative: Kurz, Arnd

(57) **Abstract**

Aqueous fluoropolymer dispersion comprising a polytetrafluoroethylene (PTFE) copolymer containing up to 1% by weight of at least one copolymer ("modifier") selected from perfluorinated alkyl vinyl ether (PAVE) and perfluorinated alkyl allyl ether (PAAE) wherein the alkyl chains may be interrupted once or more than once by oxygen atoms, wherein the PTFE polymer has an MFI (372/5) of less than 0.3 g/ 10 min wherein the polytetrafluoroethylene copolymer has a haze value of at least 61% and wherein the dispersion further comprises from greater than 0 and up to 5.000 ppm of a fluorinated surfactant selected from a linear or branched perfluorinated or partially fluorinated alkanoic acids wherein the alkyl residue is interrupted once or more than once by an oxygen atom. Further provided are a method of making the fluoropolymers, a method of coating substrates with the fluoropolymers and coated substrates.

## Description

### Field

The disclosure relates to aqueous polytetrafluoroethylene dispersions having an improved transparency. The present disclosure further relates to a method for producing such aqueous dispersions and their use for coating certain substrates.

### Background

Fluoropolymers, i.e. polymers having a fluorinated backbone, have been long known and have been used in a variety of applications because of several desirable properties such as heat resistance, chemical resistance, weatherability, UV-stability etc. Various fluoropolymers are for example described in "Modern Fluoropolymers", edited by John Scheirs, Wiley Science 1997. The fluoropolymers may have a partially fluorinated backbone, generally at least 40% by weight fluorinated, or a fully fluorinated backbone. Particular examples of fluoropolymers include polytetrafluoroethylene (PTFE), copolymers of tetrafluoroethylene (TFE) and hexafluoropropylene (HFP) (FEP polymers), perfluoroalkoxy copolymers (PFA), ethylene-tetrafluoroethylene (ETFE) copolymers, terpolymers of tetrafluoroethylene, hexafluoropropylene and vinylidene fluoride (THV) and polyvinylidene fluoride polymers (PVDF).

In particular PTFE dispersions have found wide applications because of the unique and desirable chemical and physical properties of PTFE. For example, PTFE dispersions are frequently used in preparing coating compositions for coating metal substrates such as cookware because of the high temperature resistance of PTFE and anti-stick properties. The chemical resistance and corrosion resistance of PTFE have been exploited in industrial applications such as in chemical manufacturing plants. Because of its unrivalled weathering stability, PTFE has further been used for coating glass fabrics, for example in architectural applications. Details on fabrication and processing of PTFE-dispersions can be found in Fluoroplastics, Vol. 1, "Non-melt processible fluoroplastics", p. 168-184, Sina Ebnesajjad, Plastics Design Library, Norwich, NY 13815, publ. 2000.

PTFE is typically obtained by aqueous emulsion polymerization. The aqueous emulsion polymerization is typically carried out in the presence of a non-telogenic fluorinated surfactant. Frequently used fluorinated surfactants include perfluorooctanoic acids and salts thereof, in particular ammonium perfluorooctanoic acid The aqueous emulsion polymerization method to produce PTFE is well known and is described in for example US 2,434,058, US 2,965,595, DE 25 23 570 and EP 030 663.

PTFE may be used to form shaped articles, which typically involves isolating the polymer from the latex and sintering the resulting polymer and shaping the resulting product using various techniques. Stability of the resulting polymer dispersion is of no great interest because the PTFE will be precipitated and subject to shaping steps. Such PTFE's are also referred in the art as PTFE fine powders. When PTFE is applied as a coating, the resulting PTFE dispersions are required to be stable to avoid premature precipitation of the PTFE, in particular, during the coating process which typically involves spray coating. Therefore, depending on the end use of the PTFE the polymerization methods may differ. While PTFE is known and has found widespread application for numerous purposes, it is still be desirable to have PTFE polymers with improved properties, in particular for coating applications. In particular, there is a desire to provide PTFE dispersions that can be used to provide a coating of higher transparency which is of benefit for applications where colour or patterns on a substrate are meant to be still recognizable after being coated with a PTFE-dispersion or simply by reducing the visual interference of the PTFE polymers with colorants or other additives. Desirably, such polymers and polymer dispersions also have further favourable properties such as shear stability or film forming.

In EP 1816148 PTFE fine powder compositions for shaped article are reported that have an improved transparency determined by their haze value. The PTFE fine powders are reported to achieve haze values of greater than 40% with specific examples reporting a haze values up to 58%.

### Summary

In one aspect of the following disclosure there is provided an aqueous fluoropolymer dispersion comprising a polytetrafluoroethylene (PTFE) copolymer containing up to 1% by weight of at least one comonomer ("modifier") selected from perfluorinated alkyl vinyl ether (PAVE) and perfluorinated alkyl allyl ether (PAAE) wherein the alkyl chains may be interrupted once or more than once by oxygen atoms, wherein the PTFE polymer has an MFI (372/5) of less than 0.3 g/ 10 min wherein the polytetrafluoroethylene copolymer has a haze value of greater than 60% and wherein the dispersion further comprises from 0 and up to 5.000 ppm of a fluorinated surfactant selected from a linear or branched perfluorinated or partially fluorinated alkanoic acids wherein the alkyl residue of the acid is interrupted once or more than once by an oxygen atom.

In another aspect there is provided a coated substrate obtained from the dispersion.

In yet another aspect there is provided a method of preparing a fluoropolymer comprising (i) preparing a seed composition by aqueous emulsion polymerization of TFE and one or more modifier, (ii) preparing a shell onto the seed particles by aqueous emulsion polymerization of TFE and at least one or more modifier wherein the total amount of modifiers does not exceed 1 % by weight based on the total weight of the fluoropolymer and wherein at least the preparation of the seed composition is carried out in the presence of a fluorinated surfactant selected from a linear or branched perfluorinated or partially fluorinated alkanoic acids wherein the alkyl residue is interrupted once or more than once by an oxygen atom, wherein, if applicable, the amount of fluorinated emulsifier has been reduced to not exceed 5.000 ppm based on the total weight of the dispersion of step (ii) and, optionally isolating the fluoropolymer.

In a further aspect there is provided a method of coating a substrate said method comprising applying the dispersion to a substrate.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition are indicated by % by weight (or "% wt". or "wt %") unless specified otherwise. The amounts of all ingredients gives 100% wt unless specified otherwise. If the amounts of ingredients is identified by % mole the amount of all ingredients gives 100% mole unless specified otherwise.

### Fluoropolymers:

The fluoropolymers provided herein are tetrafluoroethene copolymers. Typically, they have a melting point of at least 317°C or at least 319°C or at least 321 °C. Typically, the polymers have a melting point between 320 and 330°C. When referred herein to a melting point the melting point of the once molten material is meant unless stated otherwise. Polymers with a very high content of TFE-units tend to have different melting points when being molten for the first time and after being molten for the first time, in which case the melting point tends to be somewhat lower. However, once the material has been molten the melting point remains constant.

Preferably, the tetrafluoroethene copolymers provided herein are non-meltprocessable. Typically, they have an MFI (372/5) of less than 0.3 g /10 min, preferably less than 0.1 g/10 min more preferably less than 0.01 g/ 10 min. The determination of the MFI has been described, for example, in DIN EN ISO 12086-2 : 2006-05.

Preferably, the fluoropolymers are high molecular weight polymers. Typically, they may have a standard specific gravity (SSG) of from 2.14 and up to 2.20, preferably from 2.15 and up to 2.18 g/cm³, more preferably from 2.16 and up to 2.18 g/cm³. The SSG may be determined, for example, according to DIN EN ISO 12086-2 : 2006-05.

The fluoropolymer particles may be spherical or elongated. Elongated particles may have, for example, a ratio of length to diameter of greater than 5 : 1. Preferably the particles approximate spheres or are spherical. Approximate spheres are particles where the length to diameter ratio is less than 5 : 1 and greater than 1 : 1, preferably less than 3 : 1 and greater than 1:1. In case a particle has several lengths or diameters, the greatest length or diameter are referred to herein as "diameter" and "length".

The fluoropolymers according to the present disclosure have a haze value of greater than 60%, preferably at least 61%, more preferably at least 63% and most preferably at least 65%. The haze value can be determined as described in the experimental section. The greater the haze value the more transparent is the polymer.

The fluoropolymers are modified PTFE polymers. Modified PTFE polymers are PTFE polymers that contain at least one perfluorinated comonomer (also referred to as "modifiers"). The amount of modifiers is to 1 % by weight based on the total weight of the polymer. Preferably, the total amount of modifiers is from 50 to 5,000 ppm, more preferably from 100 to 3,000 ppm (based on the total weight of the polymer).

### Modifier(s):

Preferably, the at least one modifier is selected from (i) C3 to C8 perfluoroolefines, (ii) perfluorinated alkylethers and (iii) perfluorinated alkoxyethers.

Examples of C3 - C8 perfluorolefins include, but are not limited to, hexafluoropropene (HFP) and perfluoro-n-butene (PFB).

Examples of perfluorinated alkyl ethers include compounds according to the general formula

CF₂=CF-(CF₂)ₓ-O-R_{f} (I),

wherein R_{f} is a linear or branched C1 to C10 perfluoroalkyl chain and x is either 0 (vinyl) or 1 (allyl). Particular examples include perfluoromethyl vinyl ether (PMVE), n-perfluoropropyl vinyl ether (PPVE), perfluoromethyl allyl ether (PMAE) and perfluoropropyl allyl ether (PPAE). Particular examples of R_{f} include CF₃, C₂F₅, and C₃F₇.

Perfluoro alkyl vinyl or allyl ether whose alkyl chains are interrupted once or more than once are referred to as herein as perfluorinated alkoxy ethers. Examples of perfluorinated alkoxyethers include compounds according to the general formula

CF₂=CF-(CF₂)ₙ-O-Rf' (II),

wherein n represents either 0 or 1. Rf' represents a linear or branched, cyclic or acyclic perfluorinated alkyl residue that is interrupted once or more than one by catenary oxygen atom. Rf' may contain up to 10, preferably, or up to 6 carbon atoms, such as 1, 2, 3, 4, 5 and 6 carbon atoms. Typical examples of Rf' include linear or branched alkyl residues containing 1, 2, 3, 4 or 5 catenary ether oxygen atoms. Further examples of Rf' include residues containing one or more of the following units and combinations thereof:
-(CF₂O)-, -(CF₂CF₂-O)-, (-O-CF₂)-, -(O-CF₂CF₂)-, -CF(CF₃)-,
-CF(CF₂CF₃)-, -O-CF(CF₃)-, -O-CF(CF₂CF₃)-, -CF(CF₃)-O-, -CF(CF₂CF₃)-O-.

Further examples of Rf' include but are not limited to:
-(CF₂)ᵣ₁-O-C₃F_{7,}
-(CF₂)ᵣ₂-O-C₂F_{5,}
-(CF₂)ᵣ₃-O-CF_{3,}
-(CF₂-O)ₛ₁-C₃F_{7,}
-(CF₂-O)ₛ₂-C₂F_{5,}
-(CF₂-O)ₛ₃-CF₃,
-(CF₂CF₂-O)ₜ₁-C₃F_{7,}
-(CF₂CF₂-O)ₜ₂-C₂F_{5,}
-(CF₂CF₂-O)ₜ₃-CF_{3,}
wherein r1 and s1 represent 1, 2, 3, 4, or 5, r2 and s2 represent 1, 2, 3, 4, 5 or 6, r3 and s3 represent 1, 2, 3, 4, 5, 6 or 7; t1 represents 1 or 2; t2 and t3 represent 1, 2 or 3.

Specific examples of suitable perfluorinated alkoxy ethers include but are not limited to
F₂C=CF-O-CF₂-O-(CF₂)-F, (MV 11)
F₂C=CF-O-CF₂-O-(CF₂)₂-F, (MV 12)
F₂C=CF-O-CF₂-O-(CF₂)₃-F, (MV 13)
F₂C=CF-O-CF₂-O-(CF₂)₄-F, (MV 14)
F₂C=CF-O-(CF₂)₂-OCF₃, (MV 21)
F₂C=CF-O-(CF₂)₃-OCF₃, (MV 31)
F₂C=CF-O-(CF₂)₄-OCF₃, (MV 41)
F₂C=CF-CF₂-O-(CF₂)₃-(OCF₂)₂-F,
F₂C=CF-CF₂-O-CF₂-(OCF₂)₃-CF₃,
F₂C=CF-CF₂-O-CF₂-(OCF₂)₄-CF₃,
F₂C=CF-CF₂-O-(CF₂O)₂-OCF₃,
F₂C=CF-CF₂-O-(CF₂O)₃-OCF₃,
F₂C=CF-CF₂-O-(CF₂O)₄-OCF_{3.}
and propoxypropylvinylethers for example PPVE-2 exemplified in formula (III) below and including its isomers (e.g. PPVE-1, PPVE-3).

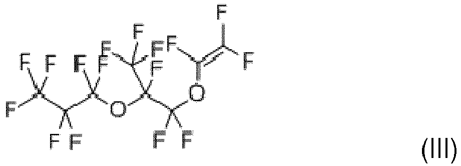

Perfluorinated comonomers as described above are either commercially available, for example from Anles Ltd. St. Peterburg, Russia or can be prepared according to methods known in the art, or as described in EP 1 240 125 to Worm et al., or EP 0 130 052 to Uschold et al. or in Modern Fluoropolymers, J. Scheirs, Wiley 1997, p 376 - 378.

In an embodiment of the present disclosure a combination of at least two of the above modifiers is used. The combination may be between modifiers of the same type (i), (ii) or (iii) as described above. In one embodiment combinations of modifiers from different types may be used, for example combinations of type (i) and type (ii) modifiers, combinations of type (i) and type (iii) modifiers and combinations of type (ii) and type (iii) modifiers.
In another embodiment a combination of modifiers is used and at least one modifier is a PPVE. In another embodiment a combination of modifiers is used and the combination includes PPVE-2. In another embodiment a combination of modifiers is used and the combination includes PPVE-1. In another embodiment a combination of modifiers is used and the combination includes MV 31, MV 21, MV 11 and/or MV 41.

In one embodiment the polymers may be core-shell polymers containing a core and at least one shell. The core and the shell may contain different modifiers. In another embodiment the polymer is a core-shell polymer with different shells and the shells contain different modifiers. It is also possible that the core contains a combination of modifiers while the shell contains only one modifier and vice versa.

### Functional comonomers:

In addition to the above modifiers the fluoropolymers minor amounts of functional comonomers may be used in the polymerization to produce more polar groups on the polymer surface. Such functional comonomers include perfluorinated olefins with at least one polar functional groups. Examples include compounds according to the general formula

CF₂=CF(CF₂)ₓ-Aₚ-R_{f}-Y

wherein R_{f} is C1 to C10 linear or branched perfluoroalkylene residue with at least one oxygen atom, Y is COO-, COOR, CN, COF, SO₃-, SO₂F, SO₂NR¹R², R¹ and R² may be the same or different and represent a hydrocarbon group such as a C1 to C10 alkyl group, x is 1, 2 or 3. A is (O)_{y}-(CF₂)ₙ, OCF₃(CF₃)CF₂ or a combination thereof, y is 0 or 1 and n is 0, 1, 2 or an integer from 3 to 8 and p is 1 or an integer from 2 to 8. Specific examples include but are not limited to CF₂=CF-O-CF₂CF₂Y, CF₂=CF-O-[CF₂CF₂]₂Y, CF₂=CF-O-[CF₂CF₂]₃Y, CF₂=CF-O-CF(CF₃)CF₂OCF₂CF₂Y with Y being selected from SO₃-; COO-, and COOR, for example COOCH₃.

The functionalized comonomers are preferably added towards the end of the polymerization, for example during the last 25%, preferably the last 10% or even the last 5% of the polymerization reaction. The amount of functionalized comonomer is less than 0.5 % by weight, preferably less than 0.1 % by weight, more preferably 0.05% by weight based on the total weight of the polymer and the amount of the functional comonomers is adjusted to the amount of the modifiers used to ensure the total amounts of comonomers (functional comonomers and modifiers) does not exceed 1 % wt, preferably does not exceed 0.5 % wt, most preferably does not exceed 0.3 % wt. based on the total weight of the fluoropolymer.

### Preparation of the fluoropolymers:

Tetrafluoroethene copolymers are usually prepared by emulsion or suspension polymerisation. In a suspension polymerisation the reaction mixture coagulates and settles as soon as stirring of the reaction mixture is discontinued. Suspension polymerisations are carried out in the absence of emulsifiers. Usually vigorously stirring is required.
The polymers according to the present disclosure are preferably prepared by aqueous emulsion polymerisation. Such polymerisations are carried out in a way that stable dispersions are obtained and are well known in the art. The dispersions remain stable after stirring of the reaction mixture has stopped for at least 2 hours, or at least 12 hours or at least 24 hours. To generate stable dispersions one or more fluorinated emulsifiers are employed in the aqueous emulsion polymerisation. The fluorinated emulsifier is typically used in an amount of 0.01% by weight to 1% by weight based on solids (polymer content) to be achieved. The fluorinated emulsifiers employed in the preparation of the polymers described herein are emulsifiers of the general formula:

[R_{f}-O-L-Y⁻]ᵢXᵢ⁺ (IV)

wherein L represents a linear or branched or cyclic partially or fully fluorinated alkylene group or an aliphatic hydrocarbon group, R_{f} represents a linear or branched or cyclic, partially or fully fluorinated aliphatic group or a linear or branched partially or fully fluorinated group interrupted with one or more oxygen atoms, Xᵢ⁺ represents a cation having the valence i and i is 1, 2 and 3 and Y represents COO or SO₃, preferably the emulsifiers are carboxylates and Y is COO. In case the emulsifier contains one or more partially fluorinated aliphatic group it is referred to as a partially fluorinated emulsifier. Preferably, the molecular weight of the emulsifier is less than 1,000 g/mole (anionic part of the emulsifier - excluding the weight of the cation(s) X), more preferably less than 500 g/mole. In one embodiment an emulsifier is used with L being a branched perfluorinated group. In another embodiment an emulsifier is used with L being a linear partially fluorinated group. In yet another embodiment an emulsifier is used with L being a linear perfluorinated group.
Specific examples are described in, for example, US Pat. Publ. 2007/0015937 (Hintzer et al.). Exemplary emulsifiers include: CF₃CF₂OCF₂CF₂OCF₂COOH, CHF₂(CF₂)₅COOH, CF₃(CF₂)₆COOH, CF₃O(CF₂)₃OCF(CF₃)COOH, CF₃CF₂CH₂OCF₂CH₂OCF₂COOH, CF₃O(CF₂)₃OCHFCF₂COOH, CF₃O(CF₂)₃OCF₂COOH, CF₃(CF₂)₃(CH₂CF₂)₂CF₂CF₂CF₂COOH, CF₃(CF₂)₂CH₂(CF₂)₂COOH, CF₃(CF₂)₂COOH, CF₃(CF₂)₂(OCF(CF₃)CF₂)OCF(CF₃)COOH, CF₃(CF₂)₂(OCF₂CF₂)₄OCF(CF₃)COOH, CF₃CF₂O(CF₂CF₂O)₃CF₂COOH, and their salts.

In one embodiment, the emulsifier may be added as a microemulsion with a fluorinated liquid, such as described in U.S. Publ. No. 2008/0015304 (Hintzer et al.), WO Publ. No. 2008/073251 (Hintzer et al.), and EP Pat. No. 1245596 (Kaulbach et al.). In another embodiment, the fluorinated emulsifier is not added as a microemulsion. For example it may be added to the aqueous phase before or while the reaction is started and proceeds.

The aqueous emulsion polymerization may be initiated with a free radical initiator or a redox-type initiator. Any of the known initiators for initiating an aqueous emulsion polymerization of TFE can be used. Suitable initiators include organic as well as inorganic initiators, although the latter are generally preferred. Exemplary organic initiators include: organic peroxide such as bissuccinic acid peroxide, bisglutaric acid peroxide, or tert-butyl hydroperoxide. Exemplary inorganic initiators include: ammonium- alkali- or earth alkali salts of persulfates, permanganic or manganic acids, with potassium permanganate preferred. A persulfate initiator, e.g. ammonium persulfate (APS), may be used on its own or may be used in combination with a reducing agent. Suitable reducing agents include bisulfites such as for example ammonium bisulfite or sodium metabisulfite, thiosulfates such as for example ammonium, potassium or sodium thiosulfate, hydrazines, azodicarboxylates and azodicarboxyldiamide (ADA). Further reducing agents that may be used include sodium formaldehyde sulfoxylate or fluoroalkyl sulfinates. The reducing agent typically reduces the half-life time of the persulfate initiator. Additionally, a metal salt catalyst such as for example copper, iron, or silver salts may be added.

The amount of the polymerization initiator may suitably be selected to generate the desired yield and particle sizes, but it is usually preferably from 2 to 600 ppm, based on the mass of water used in the polymerisation. The MFI can also, or additionally, be adjusted by using a chain transfer agent. Typical chain transfer agents include ethane, propane, butane, alcohols such as ethanol or methanol or ethers like but not limited to dimethyl ether, tert butyl ether, methyl tert butyl ether. Preferably, the polymerization is carried out with using a chain-transfer agent.

The aqueous emulsion polymerization system may further comprise auxiliaries, such as buffers, and complex-formers. It is preferred to keep the amount of auxiliaries as low as possible to ensure a higher colloidal stability of the polymer latex. The aqueous emulsion polymerization further comprises the comonomers (modifiers) as described above and -if present- the functional comonomers.

Preferably the reaction conditions and ingredients are chosen such that the resulting fluoropolymer dispersion has a particle size from 100 to 400 nm, preferably 150 to 300 nm, most preferably 150 to 250 nm (expressed as Z-average).

In one embodiment of the present disclosure a seeded polymerization is used to produce the fluoropolymer according to the present disclosure. A seeded polymerization involves as a first step the formation of seed polymer particles. The seed polymerization is known in the art of making fluoropolymers and is described, for example, in U.S. Pat. No. 4,391,940 (Kuhls et al.) or WO03/059992 A1, or EP 1,533,325 B1. The seed particles can be prepared as described above regarding the preparation of fluoropolymers and as recited in the above seed polymerization references. Preferably, the seed polymerization is carried out by aqueous emulsion polymerization to reach fluoropolymer particles of average particle size 30 to 149 nm, preferably 50 to 130 nm. The fluoropolymer particles forming the core may have an SSG from for example 2.13 - 2.20, preferably from 2.14 - 2.19 g/cm³. In one embodiment the core of the particles have a lower molecular weight than the shell(s) of the particles. The core of the particles may have a lower SSG than the shell(s). In another embodiments the core of the particle has a molecular weight that is greater than that of the shell(s).

The fluorinated emulsifiers are used as described above. Comonomers are used in the seed polymerization as described above. Their amount is adapted to the amount used in the preparation of the shell to limit the maximum amounts of comonomers to the values indicated above and below. The polymerization may then be stopped. Typically the resulting seed dispersion may be diluted, for example by factor 2 to 20, with water before the shell is polymerized onto the seed particles, which then form the core of the core-shell particles generated in the second step.
The polymerization of the shell is carried out as aqueous emulsion polymerization. Initiator and - if necessary fluorinated emulsifiers- are added and TFE and comonomers as described above may be fed to the composition during the polymerization. The comonomer may be added continuously till the end of the polymerization but preferably at least for a substantial amount of the polymerization, for example for at least 50% of the polymerization time, preferably for 75% or more preferably for 90% of the polymerization time. The weight ratio of core to shell (weight determined by TFE consumption) may be from 1 : 99 to 1 : 9.

In one embodiment of the present disclosure there is provided a method of preparing the fluoropolymers as described herein comprising (i) preparing a seed composition by aqueous emulsion polymerization of TFE and one or more of the modifiers as described herein, (ii) preparing a shell onto the seed particles by aqueous emulsion polymerization of TFE and at least one or more of the modifiers as described herein wherein the total amount of modifiers does not exceed 1 % by weight based on the total weight of the fluoropolymer and wherein at least the preparation of the seed composition is carried out in the presence of the fluorinated surfactants described herein and wherein the amount of fluorinated emulsifier does not exceed 5.000 ppm based on the total weight of the dispersion of step (ii) and, optionally isolating the fluoropolymer. The functional comonomers as described herein may be added in step (ii).

The aqueous emulsion polymerization, whether done with or without seed particles, will preferably be conducted at a temperature of at least 10ºC, 25ºC, 50ºC, 75ºC, or even 100ºC; at most 70ºC, 80ºC, 90ºC, 100ºC, 110ºC, 120ºC, or even 150ºC. The polymerization will preferably be conducted at a pressure of at least 0.5, 1.0, 1.5, 1.75, 2.0, or even 2.5 MPa (megaPascals); at most 2.25, 2.5, 3.0, 3.5, 3.75, 4.0, or even 4.5 MPa.

Usually the aqueous emulsion polymerization is carried out by mildly stirring the aqueous polymerization mixture. The stirring conditions are controlled so that the polymer particles formed in the aqueous dispersion will not coagulate. The aqueous emulsion of the present disclosure may be carried out in a vertical kettle (or autoclave) or in a horizontal kettle. Paddle or impeller agitators may be used. The reaction is typically completed by interrupting the monomer feed.

### Fluoropolymer Dispersions:

The aqueous emulsion polymerization usually is carried out until the concentration of the polymer particles in the resulting aqueous dispersion is at least 15, 20, 25, or even 30 % by weight; at most 20, 30, 35, 40, or even 50 % by weight (also referred to a solid content).

In the resulting dispersion, the average particle size of the polymer particles is typically from about 100 to 400 nm, preferably 150 to 300 nm, most preferably 150 to 250 nm (expressed as Z-average).

The dispersions are subjected to a purification step during which the amount of fluorinated emulsifiers is reduced. Before or afterwards, the dispersions may be upconcentrated to increase the solid content. The fluoropolymer content in the dispersions may be increased by upconcentration, for example using ultrafiltration as described, for example in US 4,369,266 or by thermal decantation (as described for example in US 3,037,953) or by electrodecantation. The polymer content (typically expressed as "solid content") of upconcentrated dispersions is typically about 50 to about 70% by weight.

The removal of fluorinated emulsifiers is carried out most conveniently by anion exchange. Methods of removing the emulsifiers from the dispersions by anion-exchange and addition of stabilizing non-ionic emulsifiers are disclosed for example in EP 1 155 055 B1. Typically, dispersions subjected to a treatment of reducing the amount of fluorinated emulsifiers contain a reduced amount thereof, such as for example amounts of from about 1 to about 500 ppm (or 2 to 200 ppm) based on the total weight of the dispersion. Preferably, the dispersions are treated to have a content of fluorinated emulsifiers of less than 100 ppm, preferably less than 50 ppm. The residual amount of fluorinated emulsifiers typically is from 5 to 20 ppm.

### Coating compositions:

To generate shear stable coating compositions the resulting fluoropolymer dispersions may have their content of non-fluorinated emulsifiers adjusted to reach a total amount of stabilizing non-fluorinated emulsifiers of from 1 to 12 % wt based on polymer content, or from 1 to 6 % wt. based on the total weight of the dispersion of the non-fluorinated emulsifiers described below. In case such emulsifiers have been used as stabilising emulsifier during the anion exchange and/or upconcentration step further emulsifiers of the same or of a different type may be added if necessary to reach the final desired amounts of such emulsifiers, for example to reach the desired viscosity transition temperature (VTT) or other properties. Also the conductivity of the dispersion may be adjusted to the level described herein for example by adding salts and/or non-fluorinated ionic emulsifiers, preferably anionic emulsifiers. Examples of such emulsifiers will be described in greater detail below.

The dispersions may have a conductivity of at least 500 µS, typically between 500 µS and 5,000 µS or between 500 and 1,500 µS. The desired level of conductivity of the dispersion may also be adjusted by adding a salt thereto such as for example inorganic salts including chlorides, sulfates, sulfonates, phosphates and the like. Particular examples include sodium chloride and ammonium chloride. The level of conductivity may also be adjusted by adding an anionic non-fluorinated surfactant to the dispersion as disclosed in WO 03/020836. Adding cationic emulsifiers to the dispersions is also possible, as described for example in WO 2006/069101.

Typical anionic non-fluorinated surfactants that may be added to the dispersions (not only to adjust the conductivity but also to influence the wetting properties of the dispersions, include surfactants that have an acid group, in particular a sulfonic or carboxylic acid group. Examples of non-fluorinated anionic surfactants include surfactants that have one or more anionic groups. Anionic non-fluorinated surfactants may include in addition to one or more anionic groups, other hydrophilic groups such as polyoxyalkylene groups having 2 to 4 carbons in the oxyalkylene group (for example, polyoxy ethylene groups). Typical non-fluorinated surfactants include anionic hydrocarbon surfactants. The term "anionic hydrocarbon surfactants" as used herein comprises surfactants that include one or more hydrocarbon moieties in the molecule and one or more anionic groups, in particular acid groups such as sulfonic, sulfuric, phosphoric and carboxylic acid groups and salts thereof. Examples of hydrocarbon moieties of the anionic hydrocarbon surfactants include saturated and unsaturated aliphatic groups having for example 6 to 40 carbon atoms, preferably 8 to 20 carbon atoms. Such aliphatic groups may be linear or branched and may contain cyclic groups. The hydrocarbon moiety may also be aromatic or contain aromatic groups. Additionally, the hydrocarbon moiety may contain one or more hetero-atoms such as for example oxygen, nitrogen and sulfur.

Particular examples of non-fluorinated, anionic hydrocarbon surfactants include alkyl sulfonates such as lauryl sulfonate, alkyl sulfates such as lauryl sulfate, alkylarylsulfonates and alkylarylsulfates, and alkylsulfosuccinates, fatty (carboxylic) acids and salts thereof such as lauric acids and salts thereof and phosphoric acid alkyl or alkylaryl esters and salts thereof. Commercially available anionic hydrocarbon surfactants that can be used include those available under the trade designation Polystep Al 6 (sodium dodecylbenzyl sulphonate) from Stepan Company, Germany; Hostapur SAS 30 (secondary alkyl sulphonate sodium salt), Emulsogen LS (sodium lauryl sulfate) and Emulsogen EPA 1954 (mixture of C2 to C4 sodium alkyl sulfates) each available from Clariant GmbH, Germany; Edenor C-12 (Lauric acid) available from Cognis, Germany; and TRITON X-200 (sodium alkylsulfonate) available from Dow Chemical, Midland, MI. Further suitable anionic surfactants include the sulfosuccinates disclosed in EP 1538177 and EP 1526142. Mixtures of different anionic surfactants may also be used.
Typical amounts of these emulsifiers may include from 0.02 to 10% wt. based on the weight of the composition, preferably from 0.01 up to 5 %wt. based on weight of fluoropolymer, more preferably from 0.05 up to 1% wt. based on weight of fluoropolymer.

### Non-fluorinated non-ionic surfactants:

The coating compositions according to the present disclosure contain non-fluorinated non-ionic surfactants. Typically, they contain these surfactants in an amount of from about 1 to 6 % weight based on the total weight of the composition, or from 2 to 12 % wt. based on the weight of fluorpolymer in the dispersion. The surfactants are non-aromatic. Suitable surfactants include those of the general formula (V):

R₁O-[CH₂CH₂O]ₙ-[R₂O]ₘ-R₃ (V)

wherein R₁ represents a linear or branched aliphatic hydrocarbon group having at least 8 carbon atoms, preferably 8 to 18 carbon atoms. In formula (V) above R₂ represents an alkylene having 3 carbon atoms, R₃ represents hydrogen or a C1-C3 alkyl group, n has a value of 0 to 40, m has a value of 0 to 40 and the sum of n+m is at least 1 and preferably n is at least 1.
In a preferred embodiment, residue R1 corresponds to (R')(R")HC- wherein R' and R" are the same or different, linear, branched or cyclic alkyl residues, R₃ is H, and m is 0. Such embodiment includes branched secondary alcohol ethoxylates. Commercially available non-ionic surfactant or mixtures of non-ionic surfactants include those available from Clariant GmbH under the trade designation GENAPOL such as GENAPOL X-080 and GENAPOL PF 40. Branched secondary alcohol ethoxylates are commercially available under the trade designation TERGTIOL TMN from Dow Chemical Company, e.g. Tergitol TMN 6, Tergitol TMN 100X and Tergitol TMN 10 from Dow Chemical Company.

Another suitable class of non-ionic non-fluorinated emulsifiers include ethoxylated amines and amine oxides.

Further non-fluorinated, non-ionic surfactants that can be used include alkoxylated acetylenic diols, for example ethoxylated acetylenic diols. The ethoxylated acetylenic diols for use in this embodiment preferably have a HLB between 11 and 16. Commercially available ethoxylated acetylenic diols that may be used include those available under the trade designation SURFYNOL from Air Products, Allentown, PA (for example, SURFYNOL 465). Still further useful non-ionic surfactants include polysiloxane based surfactants such as those available under the trade designation Silwet L77 (Crompton Corp., Middlebury, CT).

Other examples of non-ionic surfactants include sugar-based surfactants, such as alkylpolyglycosides and the like. Sugar-based surfactant contain one or more cyclic aliphatic polyols and comprise one or more linear or branched alky chain residue that may optionally be interrupted by oxygen atoms (ether atoms). The linear or branched residues typically include alkyl, alkoxy or polyoxy alkyl residues and may contain at least 6 carbon atoms or at least 8 carbon atoms and typically between 6 to 26 or 8 to 16 carbon atoms

A preferred type of sugar-based emulsifiers includes alkyl glucosides. Alkyl glucosides contain at least one glucose moiety. Examples of alkyl poly glucosides include compounds represented by formula (VI): 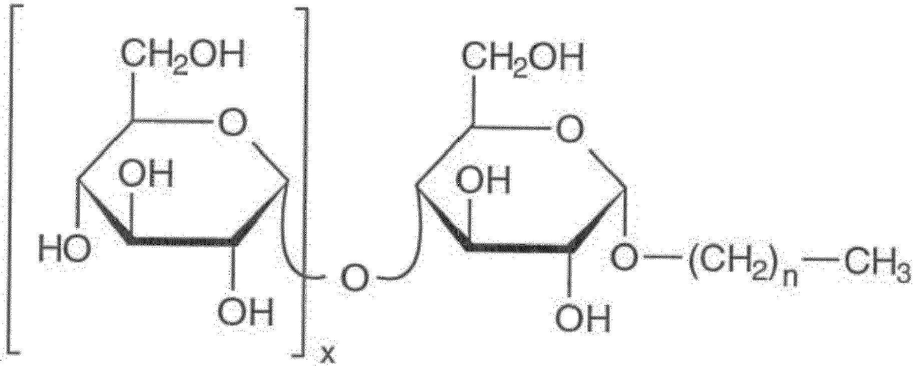 wherein x represents 0, 1, 2, 3, 4 or 5 and n represents an integer of from 6 to 22. In case x is 0, the ether oxygen contains a hydrogen and forms a hydroxyl group.

It is understood that the above formula represents specific examples of alkyl poly glucosides showing glucose in its pyranose form. Other suitable examples include, for example but are not limited to, molecules where one or more of the hydroxy hydrogens in the above formula are substituted by alkyl, alkyoxy or polyoxy alkyl residues. Also the repeating glucose residue in the square brackets on the left hand-site of formula (VI) may be replaced by other sugar moieties, which may or may not contain further alkyl-, alkoxy or polyoxyalkyl residues. Alkyl poly glucosides are available, for example, by acid-catalysed reaction of glucose, starch or n-butyl glucosides with fatty alcohols which typically yields a mixture of various alkyl glucosides (Alkylpolygylcoside, Römpp, Lexikon Chemie, Version 2.0, Stuttgart/New York, Georg Thieme Verlag, 1999). Examples of fatty alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid and combinations thereof. Alkyl glucosides are also commercially available under the trade designation Glucopon from Cognis GmbH, Düsseldorf, Germany.

Another class of non-ionic surfactants includes polysorbates. Polysorbates include ethoxylated, propoxylated or alkoxylated sorbitans and may further contain linear cyclic or branched alkyl residues, such as but not limited to fatty alcohol or fatty acid residues. Useful polysorbates include those available under the trade designation Polysorbate 20, Polysorbate 40, Polysorbate 60 and Polysorbate 80. Polysorbate 20, is a laurate ester of sorbitol and its anhydrides having approximately twenty moles of ethylene oxide for each mole of sorbitol and sorbitol anhydrides. Polysorbate 40 is a palmitate ester of sorbitol and its anhydrides having approximately twenty moles of ethylene oxide for each mole of sorbitol and sorbitol anhydrides. Polysorbate 60 is a mixture of stearate and palmitate esters of sorbitol and its anhydrides having approximately twenty moles of ethylene oxide for each mole of sorbitol and sorbitol anhydrides.

While the fluoropolymers provided herein already have good or improved shear stability and film forming properties such properties of the aqueous dispersions containing them may be further improved by the non-ionic emulsifiers employed. The dispersion properties may be optimized for shear stability and/or film forming properties by choosing the type of non-ionic emulsifier and if desired combination of non-ionic and ionic emulsifiers.

Typical amounts of non-ionic emulsifiers include 1 to 12 % by weight based on the weight of fluoropolymer in the dispersion or from 1 to 6 % wt. based on the total weight of the dispersion.

The dispersion typically have a critical film thickness (CFT) in the test as described in the example section of greater than 10 µm. The dispersions have a shear stability according to the shear stability test as described in the example section of at least one minute.

The dispersions may further contain ingredients that may be beneficial when coating or impregnating the dispersion on a substrate, such as adhesion promoters, friction reducing agents, coalescent agents, pigments and the like, hereinafter also referred to as "additives". Optional components include, for example, buffering agents and oxidizing agents as may be required or desired for the various applications.

In many applications, the PTFE dispersions resulting after polymerization and upconcentration are combined with further additives or components to produce a coating composition. Such coating compositions may be applied to a substrate, for example by spray coating, roller coating, dip coating and curtain coating.

Possible coating compositions include base coats, intermediate coats and top coats. For example, in metal coating, in particular for coating cookware, a base coat composition may be obtained by further blending heat resistant polymers such as polyamide imide, polyimide or polyarylene sulphide with the PTFE dispersion. Still further ingredients such as pigments and mica particles may be added as well to obtain a base coate composition for coating metal. Such additional components are typically dispersed in organic solvents such as toluene, xylene or N-methylpyrrolidone. The fluoropolymer dispersions typically represent about 10 to 80% by weight of the coating composition. Coating compositions for metal coatings and components used therein have been described in e.g. WO 02/78862, WO 94/14904, EP 22257 and US 3,489,595. Preferably, the dispersions provided herein are top coat compositions. Top coat compositions are typically applied to a coated substrate, typically a coated metal substrates. Typically, the coated substrate is coated by a composition containing one or more fluoropolymers.

The resulting polymer dispersion can also be used to prepare dispersions with bimodal, and multimodal particle size distributions for example by mixing different dispersions. These distributions may have a wide distribution, such as, for example, particle sizes ranging from 20 nm to 1000 nm as disclosed in e.g. US 5,576,381, EP 0 990 009 B1 and EP 969 055 A1. Multi-modal fluoropolymer particle dispersions may present advantageous properties in coatings, such as better adhesion to the substrate and denser film formation. For example, the fluoropolymer dispersions may comprise a mixture of first fluoropolymer particles having an average particle size (Z-average) of at least 180 nm in combination with second fluoropolymer particles that have an average particle size (Z-average particle diameter) of less than 180 nm, preferably an average particle size of not more than 0.9 or not more than 0.7 times the average particle size (Z-average) of the first fluoropolymer particles (as disclosed, for example, in US 5,576,381). Bimodal or multi-modal fluoropolymer dispersions can be conveniently obtained by blending the aqueous fluoropolymer dispersion of different fluoropolymer particle sizes together in the desired amounts. The fluoropolymer population may not only be bimodal or multimodal with respect to the particle sizes but may also be bimodal or multimodal with respect to the fluoropolymers or the molecular weight of the fluoropolymers used. For example the first polymer having an average particle size of at least 180 nm may be a fluoropolymer as provided herein and the second fluoropolymer having an average particles size that is not more than 0.9 or not more than 0.7 times the average particle size of the first polymer may be a non-melt processable PTFE or a meltprocessable fluoropolymer, for example a PFA. Similarly the second fluoropolymer may be a fluoroelastomer. Suitable dispersion of melt-processible fluoropolymers that can be mixed with the non-melt processable fluoropolymer dispersions include dispersions of the following fluoropolymers: copolymers of TFE and a perfluorinated vinyl ether (PFA) and copolymers of TFE and HFP (FEP). PFA polymers typically contain from 2 to 12% by weight of comonomers, typically comonomers being selected from the "modifiers" described above. FEP polymer typically contain from 70-90 %wt of TFE, 30-10%wt of HFP and 0-1 % wt of other perfluorinated comonomers the total composition giving 100% wt.. Such dispersions may be monomodal, bi-modal or multimodal as disclosed in e.g. EP 990 009 A1. The dispersion provided herein may also contain one or more of the fluoropolymers provided herein and one or more PTFE micropowder. PTFE micropowders are PTFE polymers having an SSG of greater than 2.20 g/cm³.

The following list of embodiments and the following examples are provided to further illustrate the present disclosure. Embodiments and examples are illustrative only and are not meant to limit the disclosure to the following particular embodiments and examples.

### List of illustrative embodiments

1. Aqueous fluoropolymer dispersion comprising a polytetrafluoroethylene (PTFE) copolymer containing up to 1% by weight of at least one comonomer ("modifier") selected from perfluorinated alkyl vinyl ether (PAVE) and perfluorinated alkyl allyl ether (PAAE) wherein the alkyl chains may be interrupted once or more than once by oxygen atoms, wherein the PTFE polymer has an MFI (372/5) of less than 0.3 g/ 10 min wherein the polytetrafluoroethylene copolymer has a haze value of at least 61% and wherein the dispersion further comprises from greater than 0 and up to 5.000 ppm of a fluorinated surfactant selected from a linear or branched perfluorinated or partially fluorinated alkanoic acids wherein the alkyl residue is interrupted once or more than once by an oxygen atom.
2. The dispersion of embodiment 1 wherein the polytetrafluoroethylene copolymer has a standard specific gravity from 2.14 to 2.20 g/cm³.
3. The dispersion of any one of the preceding embodiments wherein modifier comprises a perfluoroalkoxy vinyl or allyl ether according to the general formula

   CF₂=CF-(CF₂)ₙ-O-Rf'

   wherein n represents either 0 or 1, Rf' represents a linear or branched, cyclic or acyclic perfluorinated alkyl residue that contains at least one catenary oxygen atom and contains up to 10, preferably, up to 6 carbon atoms.
4. The dispersion of any one of the preceding embodiments wherein the modifier is a perfluoroalkoxy vinyl or allyl ether selected from F₂C=CF-O-CF₂-O-(CF₂)-F (MV 11), F₂C=CF-O-CF₂-O-(CF₂)₂-F (MV 12), F₂C=CF-O-CF₂-O-(CF₂)₃-F(MV 13), F₂C=CF-O-CF₂-O-(CF₂)₄-F (MV 14), F₂C=CF-O-(CF₂)₂-OCF₃ (MV 21), F₂C=CF-O-(CF₂)₃-OCF₃ (MV 31), F₂C=CF-O-(CF₂)₄-OCF₃, (MV 41), and a propoxypropylvinylether, preferably PPVE-2.
5. The dispersion according to any one of embodiments 1 to 4 wherein the modifier comprises a combination comprising hexafluoropropylene (HFP) and at least one perfluoroalkoxy vinyl or allyl ether.
6. The dispersions according to any one of embodiments 1 to 4 wherein the modifier comprises a combination comprising n-perfluoropropyl vinyl ether (PPVE) and at least one perfluoroalkoxy vinyl or allyl ether.
7. The dispersion according to any one of the preceding embodiments wherein the polytetrafluoroethylene polymer is a core-shell polymer and wherein the core and the shell comprise at least one modifier.
8. The dispersion according to any one of the preceding embodiments wherein the amount of modifier is less than 5.000 ppm based on the total weight of the fluoropolymer.
9. The dispersion according to any one of the preceding embodiments wherein the amount of modifier is less than 5.000 ppm and the particle size is from 150 nm to 300 nm.
10. The dispersion according to any one of the preceding embodiments wherein the fluorinated emulsifier corresponds to the general formula

   [R_{f}-O-L-Y⁻]ᵢXᵢ⁺

   wherein L represents a linear or branched or cyclic, partially or fully fluorinated alkylene group or an aliphatic hydrocarbon group, R_{f} represents a linear or branched or cyclic, partially or fully fluorinated aliphatic group or a linear or branched partially or fully fluorinated group interrupted with one or more oxygen atoms, Xᵢ⁺ represents a cation having the valence i and i is 1, 2 and 3 and Y represents COO or SO₃ and wherein the molecular weight of anionic part of the emulsifier is less than 1,000 g/mole.
11. The dispersion according to any one of the preceding embodiments wherein the dispersion contains from more than 0 ppm and less than 200 ppm of the fluorinated emulsifier and further comprises from about 1 to about 12 % wt (based on fluoropolymer content) of one or more aliphatic, non-fluorinated, non-ionic surfactants.
12. The dispersion according to embodiment 11 wherein the aliphatic, non-fluorinated, non-ionic surfactants are selected from (i) alkylpolyglycosides, (ii) sorbitan esters and (iii) ethoxylates of the general formula

   R₁O-[CH₂CH₂O]ₙ-[R₂O]ₘ-R₃

   wherein R₁ represents a linear or branched aliphatic hydrocarbon group having at least 8 carbon atoms, preferably 8 to 18 carbon atoms, R₂ represents an alkylene having 3 carbon atoms, R₃ represents hydrogen or a C1-C3 alkyl group, n has a value of 1 to 40 and m has a value of 0 to 40.
13. The dispersion according to embodiment 11 wherein the aliphatic, non-fluorinated, non-ionic surfactants are selected from (i) alkylpolyglycosides, (ii) sorbitan esters and (iii) ethoxylates of the general formula

   R₁O-[CH₂CH₂O]ₙ-[R₂O]ₘ-R₃ wherein R₁ corresponds to (R')(R")HC- wherein R' and R" are the same or different, linear, branched or cyclic alkyl residues, R₃ is H, and m is 0 and n is an integer from 1 to 20.
14. A coated substrate obtained from the dispersion according to any one of embodiments 1 to 13.
15. Method of preparing a fluoropolymer as defined in embodiments 1 - 9 comprising (i) preparing a seed composition by aqueous emulsion polymerization of TFE and one or more modifier as defined in claim 1, (ii) preparing a shell onto the seed particles by aqueous emulsion polymerization of TFE and at least one or more modifier as defined in claim 1 wherein the total amount of modifiers does not exceed 1% by weight based on the total weight of the fluoropolymer and wherein at least the preparation of the seed composition is carried out in the presence of a fluorinated surfactant selected from a linear or branched perfluorinated or partially fluorinated alkanoic acids wherein the alkyl residue is interrupted once or more than once by an oxygen atom, wherein, if applicable, the amount of fluorinated emulsifier has been reduced to not exceed 5.000 ppm based on the total weight of the dispersion of step (ii) and, optionally isolating the fluoropolymer.
16. The method of embodiment 15 wherein the fluorinated emulsifier is as defined in embodiment 10.
17. The method of any one of embodiments 15 and 16 wherein a functional comonomer is added in step (ii) and wherein the amounts of modifiers and functional comonomers are adjusted such that the total amounts of functional comonomers and modifiers does not exceed 1 % wt based on the total weight of the fluoropolymer.
18. The method of any one of embodiments 16 to 17 wherein step (i) is carried out to provide a seed composition comprising fluoropolymer particles of a particle size of from about 30 to about 149 nm (Z-average) and wherein the fluoropolymer particles have an SSG of from 2.14 to 2.19 g/cm³.
19. The method of any one of embodiments 16 to 18 wherein step (ii) is carried out to provide fluoropolymer particle of a particle size of from about 150 to about 300 nm (Z-average) and wherein the fluoropolymer particles have an SSG of from 2.14 and up to 2.20 g/cm³.
20. The method of any one of embodiments 16 to 19 wherein the modifier is added continuously through step (ii) or at least until 75, preferably at least 90% of the polymerization reaction time, which is the time during which TFE is added to the reaction mixture.
21. The method of any one of embodiments 16 to 20 wherein a combination of modifiers is used to prepare the seed composition.
22. The method of any one of embodiments 16 to 21 wherein the combination of embodiment 5 is used to prepare the seed particles (core of the fluoropolymer).
23. The method of any one of embodiments 16 to 22 wherein the combination of embodiment 6 is used to prepare the seed particles (core of the fluoropolymer.
24. The method of any one of embodiments 16 to 23 wherein a combination of modifiers is used to prepare a shell of the fluoropolymer.
25. The method of any one of embodiments 16 to 24 wherein the combination of embodiment 5 is used to prepare the shell of the fluoropolymer.
26. The method of any one of embodiments 16 to 25 wherein the combination of embodiment 5 is used to prepare the shell of the fluoropolymer.
27. The method of any one of embodiments 16 to 26 wherein the combination of embodiment 6 is used to prepare the shell of the fluoropolymer.
28. The method of any one of embodiments 16 to 27 wherein the core takes up from 2 to 15% of the weight of the fluoropolymer particle.
29. The method of any one of embodiments 16 to 28 wherein the total amount of modifiers does not exceed 5.000 ppm based on the weight of the fluoropolymer.
30. A coating composition comprising the composition according to any one of embodiments 1 to 10, but comprising from greater than 0 and up to 200 ppm of the fluorinated emulsifier according to embodiment 10 and further comprising from 1 to 12% by weight based on the weight of the dispersion of an aliphatic, non-ionic, non-fluorinated emulsifier as defined in any one of embodiments 12 and 13.
31. The coating composition of embodiment 30 wherein the aliphatic, non-ionic, non-fluorinated emulsifier is selected from one or more alkylpolyglycosides.
32. The coating composition of embodiment 30 wherein the aliphatic, non-ionic, non-fluorinated emulsifier is selected from one or more sorbitan esters.
33. The coating composition of embodiment 30 wherein the aliphatic, non-ionic, non-fluorinated emulsifier is selected from one or more ethoxylates of embodiment 12 or 13.
34. The coating composition of any one of embodiments 30 to 33 further comprising from 0.02 to 10 % by weight based on the total weight of the composition of one or more aliphatic anionic surfactants selected from alkyl sulfates alkoxy sulfates, sulfosuccinates, alkyl sulfonates, alkoxy sulfonates and combinations thereof.
35. The coating composition according to any one of embodiments 30 to 34 having a solid content of from 40 to 70%.
36. Method of coating a substrate said method comprising applying the dispersion according to any one of embodiments 30 to 35 to a substrate, for example by spray coating, roller coating, dip coating and curtain coating.
37. A coated substrate comprising a coating obtained with a coating composition according to any one of embodiments 30 to 35.

### Examples

The present disclosure is further described without however wanting to limit the disclosure thereto.

### Methods

### Determination of Solid Content:

The solid content was determined gravimetrically according to DIN EN ISO 12086-2 : 2006-05. Correction for non-volatile inorganic salts was not considered.

### Particle size:

Particle size of the PTFE particles was measured via inelastic light scattering using a Malvern 1000 HAS Zetasizer. The average particle size is reported as the volume average diameter.

### Shear stability test

150 g dispersion, thermostated at 20 °C, were put into a 250 mL standard glass beaker of an inner diameter of 65 mm. The agitation head (S 25 N - 25 G) of an Ultra Turrax T25, supplied by Janke & Kunkel, was immersed in the center of the beaker such that the end of the head was 7 mm above the beaker bottom. The Ultra Turrax was switched on a revolution speed of 8000 rpm. Agitation rendered the surface of the dispersion "turbulent" or "wavy". 10 seconds after the Turrax has started 2.0 g xylene were added within less than 10 s to the agitated dispersion. Time measurement started with the addition of xylene was complete and was stopped when the surface of the agitated dispersion no longer showed visible turbulence. The surface "freezes" or smoothes due to coagulation. Coagulation was accompanied by a distinct change of sound of the Ultra Turrax. In case that the "surface freezing" could not be clearly observed due to foam formation time measurement was stopped within the onset of the change of sound. Reported shear stability values in the examples are the average of 5 measurements. Observed reproducibility was 10 %. The shear stability is expressed as the time from the complete addition of xylene till coagulation was observed.

### Standard specific gravity (SSG)

The standard specific gravity (SSG) was measured by the water displacement method according to DIN EN ISO 12086-2 : 2006-05.

### Haze:

The haze value was measure according to ASTM D 1003 using a direct reading haze meter, (the transparency meter "haze-gard plus", from BYK-Gardner GmbH, Geretsried, Germany, serial number 111156 was used). Samples were prepared as follows: The dispersion was precipitated by adding 1 litre of dispersion into a 2L beaker and mixing it with 20 ml of concentrated hydrochloric acid at a stirring speed of 800 rpm and agglomerated by adding 10 ml of gasoline (Shellsol 80-110)I. The precipitate was washed with distilled water and dried in a rotary evaporator at 90°C at reduced pressure. The dried agglomerates were then dried in a vacuum oven at 210°C for 16 h. 10 g of the precipitate were sieved through a 2 mm sieve and then compressed in a 4-stations press (350 bar, 5 min holding time) into a sheet having a diameter of 80 mm. This sheet was sintered as follows: heating from room temperature to 290 °C at the maximum heating rate. Then the sample was heated from from 290 °C to 380 °C at a heating rate of 120 °C per hour and holding the temperature of 380 °C for 30 min before cooling the sample down to a temperature of 294 °C at a cooling rate of 60 °C per hour after which the oven was switched off and the samples were allowed to reach room temperature.

### Critical film thickness (CTF)

A 200ml ml beaker was filled with the dispersion. Foam, if present, was removed by a pipette. A degreased aluminum test plate (200 x 40 x 1 mm; degreasing by rinsing with acetone), was immersed into the dispersion for 10 seconds and then hung at a plate holder at an angle of 20° and dried at ambient conditions for 5 minutes. The test sample was then put in an oven kept at 380°C for 10 minutes. The aluminum plate was then taken out of the oven and allowed to cool down at ambient conditions to reach room temperature. The plate was then examined by an optical microscope (100 x magnification) for the formation of cracks. The thickness of the layer formed on the aluminum plate was determined (using a MiniTest 3100 from ElektroPhysik Dr. Steingroever GmbH& Co. KG, Cologne, Germany). If no cracks were visible, the plate was again immersed into the dispersion for 10 seconds, dried and cooled as described above and examined again for crack formation. The thickness of the PTFE layer formed on the aluminum plate was determined. The procedure was repeated until cracks were visible. The thickness of the layer before cracks have appeared is determined as critical film thickness. The results reported were the average from two measurements.

### Melting point:

The determination of the melting point by DSC has been described, for example, in DIN EN ISO 12086-2 : 2006-05.

### Melt flow index (MFI):

The determination of the MFI can be carried out as described, for example, in DIN EN ISO 12086-2 : 2006-05. For an MFI (372/5) the measurement temperature is 372°C and the load is 5 kg.

### Conductivity

Conductivity was measured with the 712 Conductometer, supplied by Metrohm AG. In case that the conductivity of the upconcentrated dispersions was less than 1000 µS/cm, aqueous ammonium sulfate solution (1 %) was added to adjust the conductivity to about 1000 µS/cm.

### Examples

### Comparative example 1

A fluoropolymer dispersion was prepared by seed polymerization to produce a PTFE having an HFP-modified PTFE seed and a homopolymer PTFE shell. Total amount of HFP was less than 1.0 % by weight. The dispersion was subjected to anion-exchange using GENAPOL X 089 as stabilising emulsifier to reduce the content of fluorinated emulsifier to about 1 ppm. The dispersion was upconcentrated by ultrafiltration to a solid content of 58%. Particle size was 215 nm (Z-average), SSG was between 2.14 and 2.18, MFI (372/5) of less than 0.3 g / 10 min. Content of GENAPOL X 089 was 5.0% based on solid.

### Example 1

A fluoropolymer dispersion was prepared by seed polymerization to produce a PPVE-1 modified PTFE seed and a PPVE-1 modified shell. Total amount of modifiers was less than 1.0 % wt. The dispersion was subjected to the same anion-exchange treatment as comparative example 1 using GENAPOL X 089 as stabilising emulsifier to reduce the content of fluorinated emulsifier to about 1 ppm. The dispersion was upconcentrated as described in comparative example 1. Solid content was 58%, particle size was 259nm, MFI (372/5) of less than 0.3 g/ 10 min and SSG was between 2.14 and 2.18. Genapol content was 5.0% based on polymer content.

Both dispersions were subjected to shear stability and critical film thickness tests and were examined for their haze value. The results are shown in table 1

**Table 1: Comparison between dispersion and modified polymer according to the present disclosure and dispersion of comparative example 1.**

| | Example 1 | Comparative Example 1 |
|---|---|---|
| Haze [%] | 65 | 45 |
| Shear stability [min] | 1.6 | 0.22 |
| CFT [µm] | 12 | 10 |

## Claims

1. Aqueous fluoropolymer dispersion comprising a polytetrafluoroethylene (PTFE) copolymer containing up to 1% by weight of at least one comonomer ("modifier") selected from perfluorinated alkyl vinyl ether (PAVE) and perfluorinated alkyl allyl ether (PAAE) wherein the alkyl chains may be interrupted once or more than once by oxygen atoms, wherein the PTFE polymer has an MFI (372/5) of less than 0.3 g/ 10 min wherein the polytetrafluoroethylene copolymer has a haze value of greater than 60% and wherein the dispersion further comprises from 0 and up to 5.000 ppm of a fluorinated surfactant selected from a linear or branched perfluorinated or partially fluorinated alkanoic acids wherein the alkyl residue of the acid is interrupted once or more than once by an oxygen atom.

2. The dispersion of claim 1 wherein the polytetrafluoroethylene copolymer has a standard specific gravity from 2.14 to 2.20 g / cm³.

3. The dispersion of any one of the preceding claims wherein modifier comprises a perfluoroalkoxy vinyl or allyl ether according to the general formula
CF₂=CF-(CF₂)ₙ-O-Rf'
wherein n represents either 0 or 1, Rf' represents a linear or branched, cyclic or acyclic perfluorinated alkyl residue that contains at least one catenary oxygen atom and contains up to 10, preferably, up to 6 carbon atoms.

4. The dispersion of any one of the preceding claims wherein the modifier is a perfluoroalkoxy vinyl or allyl ether selected from F₂C=CF-O-CF₂-O-(CF₂)-F (MV 11), F₂C=CF-O-CF₂-O-(CF₂)₂-F (MV 12), F₂C=CF-O-CF₂-O-(CF₂)₃-F(MV 13), F₂C=CF-O-CF₂-O-(CF₂)₄-F (MV 14), F₂C=CF-O-(CF₂)₂-OCF₃ (MV 21), F₂C=CF-O-(CF₂)₃-OCF₃ (MV 31), F₂C=CF-O-(CF₂)₄-OCF₃, (MV 41), and a propoxypropylvinylether, preferably PPVE-2.

5. The dispersion according to any one of claims 1 to 4 wherein the modifier comprises a combination comprising hexafluoropropylene (HFP) and at least one perfluoroalkoxy vinyl or allyl ether.

6. The dispersions according to any one of claims 1 to 4 wherein the modifier comprises a combination comprising n-perfluoropropyl vinyl ether (PPVE) and at least one perfluoroalkoxy vinyl or allyl ether.

7. The dispersion according to any one of the preceding claims wherein the polytetrafluoroethylene polymer is a core-shell polymer and wherein the core and the shell comprise at least one modifier.

8. The dispersion according to any one of the preceding claims wherein the amount of modifier is less than 5.000 ppm based on the total weight of the fluoropolymer.

9. The dispersion according to any one of the preceding claims wherein the amount of modifier is less than 5.000 ppm and the particle size of the fluoropolymer is from 150 nm to 300 nm.

10. The dispersion according to any one of the preceding claims wherein the fluorinated emulsifier corresponds to the general formula
[R_{f}-O-L-Y⁻]ᵢXᵢ⁺
wherein L represents a linear or branched, partially or fully fluorinated alkylene group or an aliphatic hydrocarbon group, R_{f} represents a linear or branched, partially or fully fluorinated aliphatic group or a linear or branched partially or fully fluorinated group interrupted once or more than once with oxygen atoms, Xᵢ⁺ represents a cation having the valence i and i is 1, 2 and 3 and Y represents COO or SO₃ and wherein the molecular weight of anionic part of the emulsifier is less than 1,000 g/mole.

11. The dispersion according to any one of the preceding claims wherein the dispersion contains from more than 0 ppm and less than 200 ppm of the fluorinated emulsifier and further comprises from about 1 to about 6 % wt. (based on the weight of the dispersion) of one or more aliphatic, non-fluorinated, non-ionic surfactants.

12. The dispersion according to claim 11 wherein the aliphatic, non-fluorinated, non-ionic surfactants are selected from (i) alkylpolyglycosides, (ii) sorbitan esters and (iii) ethoxylates of the general formula
R₁O-[CH₂CH₂O]ₙ-[R₂O]ₘ-R₃
wherein R₁ represents a linear or branched aliphatic hydrocarbon group having at least 8 carbon atoms, preferably 8 to 18 carbon atoms, R₂ represents an alkylene having 3 carbon atoms, R₃ represents hydrogen or a C1-C3 alkyl group, n has a value of 1 to 40 and m has a value of 0 to 40.

13. A coated substrate obtained from the dispersion according to claims 11 or 12.

14. Method of preparing a fluoropolymer as defined in claims 1 - 9 comprising (i) preparing a seed composition by aqueous emulsion polymerization of TFE and one or more modifier as defined in claim 1, (ii) preparing a shell onto the seed particles by aqueous emulsion polymerization of TFE and at least one or more modifier as defined in claim 1 wherein the total amount of modifiers does not exceed 1% by weight based on the total weight of the fluoropolymer and wherein at least the preparation of the seed composition is carried out in the presence of a fluorinated surfactant selected from a linear or branched perfluorinated or partially fluorinated alkanoic acids wherein the alkyl residue is interrupted once or more than once by an oxygen atom, wherein, if applicable, the amount of fluorinated emulsifier has been reduced to not exceed 5.000 ppm based on the total weight of the dispersion of step (ii) and, optionally isolating the fluoropolymer.

15. Method of coating a substrate said method comprising applying the dispersion according to claims 11 or 12 to a substrate.
